# EUROPEAN PATENT APPLICATION

(11) **EP 1 676 614 A1**
(43) Date of publication of application: **05.07.2006**
(21) Application number: 04078561.0
(22) Date of filing: 30.12.2004
(51) Int. Cl.: B01D 15/02

(54) **Continuous process for the enantioselective enrichment and separation of enantiomers using centrifugal separation**

(71) Applicant: DSM IP Assets B.V., 6411 TE Heerlen (NL)
(72) Inventor: De Vries, Johannes Gerardus, 6228 GZ Maastricht (NL); Kwant, Gerard Jan, 6137 LM Sittard (NL); Hallett, Andrew Jon, Kingswood Bristol BS15 8EE (GB)
(74) Representative: Hermans, Edith E.H.

(57) **Abstract**

The separation of an enantiomer mixture may be effected by contacting the enantiomers in a liquid system comprising at least a first liquid containing a chiral host and a second liquid containing a washing solution, which first and second liquids are at least substantially immiscible and preferentially recovering at least one of the enantiomers from the resulting complex between the enantiomer and the chiral host. The liquid system is subjected to centrifugal forces in at least one centrifugal contact-separator whereby a liquid-liquid extraction is effected. The process may be operated continuously and may be easily scaled up to production of substantially optically pure enantiomer on a preparative or commercial scale.

## Description

The invention relates in one embodiment to the enrichment of one of the enantiomers from a mixture of enantiomers. More particularly, the invention relates to the continuous enrichment and/or separation of an enantiomer mixture using a plurality of centrifugal contact-separators and to apparatus for carrying out this process.

### Description of the Prior Art

Stereoisomers are those molecules which differ from each other only in the way their atoms are oriented in space. Stereoisomers are generally classified as diastereomers or enantiomers; the latter embracing those which are mirror images of each other, the former being those which are not. The particular arrangement of atoms that characterize a particular stereoisomer is known as its optical configuration, specified by known sequencing rules as, for example, either R or S, or D or L.

Though differing only in orientation, the practical effects of stereoisomerism are important. For example, the biological and pharmaceutical activities of many compounds are strongly influenced by the particular configuration involved. Indeed, many compounds are only of wide-spread utility when provided in a given stereoisomeric form.

When diastereomers are involved, separation is generally not a significant problem because diastereomers have different physical properties, such as melting points, boiling points, solubilities in a given solvent, densities, refractive indices, etc. Hence, diastereomers may normally be separated from each other by conventional methods, such as fractional distillation, fractional crystallization, or chromatography.

Enantiomers, on the other hand, present a special problem because their physical properties are identical. They cannot as a rule--especially when in the form of a racemic mixture--be separated by ordinary methods: not by fractional distillation, because their boiling points are identical; not by conventional fractional crystallization, because (unless the solvent is optically active) their solubilities are identical; not by conventional chromatography because (unless the adsorbent is optically active) they are held equally onto the adsorbent. When a mixture comprises equal amounts of enantiomers having different optical configurations, it is called a racemate or racemic mixture; and separation of the racemate into its respective enantiomers--this separation being generally known as a resolution--is, therefore, a process of considerable importance.

Various techniques for separating enantiomers are known. Most, however, are directed to small analytical quantities, meaning that, other drawbacks aside, when applied to preparative scale amounts (the milligram to kilogram range) a loss of resolution occurs.

One method, known as an indirect separation, involves the conversion of a mixture of enantiomers--the racemate--into a mixture of diastereomers. The conversion is accomplished by reacting the enantiomers with an optically pure chiral derivatizing agent. The resultant diastereomers are separated from each other by taking advantage of their different physical properties. Once separated, by, for example, fractional crystallization, or more commonly, chromatography, the diastereomers are re-converted back into the corresponding enantiomers, which are now optically pure. Though achieving the requisite separation, the indirect method suffers in that it is time-consuming and can require large quantities of optically pure derivatizing agent which can be expensive and is oftentimes not recoverable. Moreover, the de-derivatization step may itself result in racemization thus defeating the purpose of the separation earlier achieved.

A more current method which avoids some of the drawbacks attendant the indirect method is known as the direct method of separation. The direct method, much like the indirect method, involves the formation of a diasteromeric species. However, unlike the indirect method, this species is transient, with the stability of one species differing from the other.

In one application of the direct method, a mixture of enantiomers is allowed to interact with a chiral stationary phase, which, for example, could reside in a chromatographic column. The enantiomer that interacts more strongly with the chiral stationary phase than the other will have a longer residence time relative to the chiral stationary phase and hence a separation will occur. When the mode of interaction with the chiral stationary phase can be characterized, the elution order may be predicted.

Although the direct method may be amenable to preparative scale chromatographic separation, the monetary cost is high and the capacity for such separations is low. Thus this particular mode is not attractive for large scale development.

One attempt to overcome this problem using high-speed (centrifugal) countercurrent chromatography for chiral separation of enantiomers is described in U.S. Patent No. 6,503,398 to Ma. This patent purports to provide a preparative scale separation of chiral compounds and states that it is capable of separations in amounts of up to 1 kilogram (kg). However, the examples in this patent provided separations on only a gram scale.

In the separation of enantiomers using liquid membrane technology it is known that the addition of a chiral host molecule to the liquid membrane will enhance the rate of transport. The chiral host not only enhances transport but, more importantly, it permits selective transport. The chiral host in this situation forms a complex with an enantiomer located at the interface of the liquid membrane and source phase (in which the enantiomeric mixture is found), thus increasing the solubility of these molecules in the membrane. Enantioselective transport occurs because, as in the chiral stationary phase, the interactions leading to complexation favor one enantiomeric optical configuration over the other. Hence the transport through the liquid membrane--facilitated by the increase in the solubility of the complex--discriminates, as respects the enantiomers, in favor of the isomer which can form the more stable complex.

Liquid membranes can be utilized in various arrangements depending on the particular application desired. The common requirement for any liquid membrane is that it maintains a division between the source phase (containing the racemate) and the receiving phase (having an enrichment of a particular enantiomer). Liquid membranes configured in bulk form typically involve a container which holds the liquid membrane and a hollow cylinder which is partially immersed into the liquid membrane.

Bulk liquid membranes, however, have not been believed to attain the desired degree of resolution required for practical application. As noted above, therefore, the trend in the art has been to achieve higher rates of transport with the use of supported, rather than bulk, liquid membranes. See, e.g., WO 91/17816 and U.S. Patent No. 5,080,795.

Supported liquid membranes in enantiomeric separation tend to be unstable and have not yet been developed beyond the laboratory scale using analytic quantities and operating in a batch-wise fashion.

Thus, the problem of enantiomer resolution is two fold: not only do the known processes not provide the necessary rates of transport and degree of separation in a reasonable time period, but the type of apparatus needed, i.e., one that is simple in design, relatively inexpensive to construct and adaptable to continuous operation, is not available, partly because of the loss of resolution normally associated with a timely processing of larger quantities.

One of the problems inherent in the bulk liquid membrane approaches and, to a lesser extent in supported liquid membrane separation devices, is that the surface area available for contact between the source phase (containing the racemate) and the receiving phase (having an enrichment of a particular enantiomer) is relatively small.

Thus, in the centrifugal chromatographic countercurrent process of the aforementioned U. S. Patent No. 6,503,398, the bulk liquid constitutes a stationary, essentially immobile, phase while the sample is eluted into the mobile phase. Therefore, the process using centrifugal countercurrent chromatography is still deficient in volume throughputs and rates of separation while not being readily amenable to scale-up.

A liquid-liquid extraction method utilising an automatic countercurrent distribution apparatus is described in, for example, U.S. Patent No. 4,960,762. This technique, however, is essentially a discontinuous process and is not amenable for preparative or larger scale production of an optically pure or enriched enantiomer.

An overview of enrichment and separation of enantiomers from a mixture of enanatiomers is provided by Norbert M. Maier, et al, "Review, Separation of enantiomers: needs, challenges, perspectives" J. of Chromatography A, 906 (2001) p. 3-33. Clearly, it still remains to find a speedy, efficient and cost effective approach, which may be readily scaled-up to commercial lot size production, of highly enriched to substantially pure enantiomers.

### Some Objects of the Invention

Accordingly, an object of the invention is to provide a process and apparatus for enhancement and/or separation of one enantiomer from a mixture of enantiomers which is capable of high yield and selectivity and which is readily adaptable for commercial scale production.

It is another object of the invention to provide a process and apparatus for enantiomeric enrichment and/or separation which can be run continuously and which makes efficient use of the generally expensive chiral host compounds.

### Brief Summary of Embodiments of the Invention

It has now been found that these and other objects which will become apparent from the following more detailed description and accompanying drawings can be achieved in a continuous process which comprises:
I. continuously introducing each of (i) a feed solution containing the first and second enantiomers and (ii) a host solution containing a chiral host which will preferentially combine with the first enantiomer, into at least one first centrifugal contact-separator;
II. continuously contacting and separating the feed solution and host solution in the at least one first centrifugal contact-separator, whereby the chiral host preferentially forms a complex with the first enantiomer in the host solution to thereby obtain (iii) a host solution enriched with the first enantiomer and, optionally, containing a portion of the second enantiomer;
III. optionally, continuously washing the enriched host solution with a washing solution to remove therefrom at least a portion of the second enantiomer, and
IV. continuously stripping the first enantiomer from the enriched host. solution with a stripping solution.

In a particular embodiment of the process as described above, step III is performed and is a liquid-liquid extraction comprising:
III-A. continuously introducing each of (iii) enriched host solution from the at least one first centrifugal contact-separator and (iv) a washing solution capable of removing at least a portion of the second enantiomer from a complex thereof with the chiral host, into at least one second centrifugal contact-separator and continuously contacting and separating the enriched host solution (iii) and washing solution (iv) in the at least one second centrifugal contact-separator, thereby transferring at least a portion of the second enantiomer from the host solution into the washing solution; said process further comprising,
III-B. withdrawing from the at least one second centrifugal contact-separator
   (v) washing solution comprising transferred second enantiomer; and
   (vi) enriched host solution from which at least a portion of the second enantiomer has been preferentially washed.
      In a preferred embodiment the process further includes mixing the feed solution and the washing solution (v) from step III-B and continuously introducing the resulting mixture into the at least one first centrifugal contact-separator.
      According to still another embodiment the invention provides a method method for enriching a mixture of enantiomers which comprises continuously contacting the enantiomer mixture in a liquid system comprising at least a first liquid comprising a chiral host and a second liquid comprising a washing solution, wherein the first and second liquids are at least substantially immiscible and of different densities. The enantiomer mixture is enriched by subjecting the liquid system containing the enantiomer mixture and the chiral host to centrifugal force in each of a plurality of serially arranged centrifugal contact-separators and separating washing solution containing enriched enantiomer. Preferably, the enriched enantiomer is recovered at a rate of separation of at least about 1.1 kg of enriched enantiomer per hour. Preferably, the total amount of chiral host is less than the total amount, on a molar basis, of the separated enriched enantiomer.
      The process according to the various embodiments of the invention has many advantageous features, of which, mention may be made of, for example, providing faster separations in higher yields and purities for a given throughput of feed solution while requiring lesser amounts of expensive chiral host compounds for a given amount of enantiomer mixture in the feed solution, using less cumbersome equipment than bulk or supported liquid membrane devices or countercurrent distribution apparatus, cost effectiveness, being operable in a continuous manner and at higher capacity than other separation techniques, being readily scaled up to produce commercial size yields, for example, in excess of 1 kilogram per hour.

### Detailed Description of Embodiments of the Invention

Extractive methods for resolution of enantiomers according to the embodiments of the invention include a chirally selective host (chiral host) in one of the phases. In one embodiment, the host solution includes the chiral host in an organic solvent phase and a stripping solution (for extracting enantiomer) and feed solution, and the optional washing solution, are aqueous phases. In another embodiment, the host solution includes the chiral host contained in an aqueous phase and the stripping and feed solutions, and the optional washing solution, are based on organic solvent phases. In still other embodiments other arrangements of the host solution and the feed and stripping solutions, and optional washing solution, which together make up a liquid system, may be provided, the important feature, as will be appreciated by those skilled in the art, is that the host solution is at least substantially immiscible with the remainder of the liquid system.

As used herein, the expression "at least substantially immiscible" means that the liquid solvent(s) of the feed and receiving solution of the liquid system are insoluble in the liquid solvent of the host solution (or vice versa) to such an extent that no more than 10 percent by weight, such as no more than about 5 percent by weight, especially no more than about 1 percent by weight, more especially no more than about 0.2 percent by weight of the solvent of the feed solution and/or the solvent of the receiving solution is soluble in the host solution solvent (and vice versa).

In some embodiments of the invention the enantioselectivity of the chiral host may be a very high value (>>10). For example, for an enantioselectivity (E) of 10, in a single pass extraction of a racemate, the resolution will be 90:10 of the preferred enantiomer compared to the less preferred enantiomer. However, in accordance with embodiments of the present invention the selectivity may be much lower, for example, values of less than 7, such as no more than about 5, or even no more than about 3. For systems operating with low selectivity of the chiral host a relatively higher number of so called separation stages (equilibrium or mass transfer stages) is required. The host phase volume is normally larger as more stages are needed. Thus, for example, in the aforementioned U.S. Patent No. 4,960,762, as many as 60 separate extraction stages are required. Especially when a high yield and separation selectivity is needed a very large number of separation stages was required using prior art systems. However, by operating according to the embodiments of the present invention, even using chiral hosts with relatively low E-values, very high resolution (e.e. values) can be achieved with no more than about 40 separation stages (e.g., centrifugal contact-separators), especially, no more than about 30 or even no more than about 20 or less separation stages.

The host itself is, in most cases, a very expensive component (>10 k€ per kg host) and it is clearly costly to have a need for a large host phase volume in an extraction set-up. The process of the present invention resolves this problem of conventional enantiomer resolution processes by, for example, recycling the chiral host.

From a chemical engineering view it is clear that processes which operate in counter-current extraction mode are beneficial for efficient equipment use. However, the conventional liquid-liquid extraction processes are not able to combine a high selectivity and sufficient yield.

These processes are improved by the present invention, including the expedient of introducing the feed solution in between two separation zones, often called the stripping zone (also sometimes referred to as "back-extraction") and raffinating zone (also referred to herein as the "rectification zone"), respectively. Each zone may have a different number of extraction stages, however, in embodiments of the invention an equal number of separation stages (centrifugal contact-separators) are provided in each of the stripping zone and raffinating zone.

The operation conditions are chosen such that both enantiomers are separated, whereby a first enantiomer leaves the centrifugal contact-separator via the host phase (e.g., organic solvent phase) (for example, via the raffinating zone), while the second enantiomer leaves the unit via the washing or stripping solution (e.g., aqueous phase) (for example, via the stripping zone). Typically, the process is controlled by three flow rates: the feed solution flow rate, the host solution flow rate and the washing or stripping solution flow rate. Absolute values as well as the ratios of these flow rates are determined by the intrinsic selectivity of the chiral host, the host concentration and the adsorption strength of an enantiomer to the chiral host.

In embodiments of the invention, the flow rate of the host solution is higher than the flow rate of the stripping solution and, optional, washing solution and the flow rate of the stripping solution and, optional washing solution, is higher than the flow rate of the feed solution. However, in other embodiments of the invention the flow rates of all liquid streams are the same. Typical relative values for flow rates could be, for example, assuming an arbitrary flow rate, F 1/h, of the feed solution, as follows:
Stripping solution: 1 to 10F 1/h, and
host phase: 1 to 50F 1/h.

These values may be much different dependent on the values of the above mentioned system factors. For any particular combination of enantiomer mixture and chiral host a person of ordinary skill in the art would be able to determine optimum flow rates for each of the respective flow streams for the feed solution, host solution and stripping solution as well as, where appropriate, an optional washing solution (for example, in the embodiment as illustrated in Fig. 2).

Although any type of extractor could be used, in conventional practice many types of extractors need a high host phase (host solution) hold-up. The required amount of chiral host is, therefore, high and cost for the chiral host compound (which as noted above, tends to be intrinsically high relative to the starting enantiomer mixture) is therefore also high. This situation is unpractical for many applications. Also a high hold-up requires a long start-up time. Both requirements are not beneficial for economic processing.

These problems may be solved according to embodiments of the present invention, by using centrifugal contact-separators to effectively minimize the host hold-up. In addition, use of centrifugal contact-separators facilitates the recycle of the chiral host compound in the host solution, thus minimizing the need for the host to be present in 'catalytic amounts' or less than stoichiometric amounts. Therefore, in embodiments of the invention, the amount of chiral host inside the extractor could be stoichiometric or even higher than stoichiometric, relative to the amount of enantiomer in any particular centrifugal contact-separator, since the net amount used is largely below stoichiometic amount due to the recycle used in embodiments of the invention. That is, according to various embodiments of the invention the amount of chiral host may be in stoichiometric excess to the amount of the enantiomer in the feed solution, however, since the chiral host is recycled, the total amount of the chiral host is substantially fixed, whereas the quantity of enantiomer in the feed mixture over the course of the continuous enhancement/separation will normally be in substantial stoichiometric excess relative to the fixed amount of the chiral host. Generally, those skilled in the art will be able to determine suitable flow rates of the respective host solution, feed solution and stripping (and, optional washing solution) and the respective concentrations of the chiral host and enantiomers, to provide that there is sufficient chiral host present in the centrifugal contact-separator having the highest concentration of the enantiomer so that the maximum separation may occur in each separation stage.

The process according to various embodiments of the invention may be carried out using a centrifugal contact-separator, such as, for example, the CINC separators available from Costner Industries Nevada Corporation (CINC). Separators of this type are generally known and are described in, for example, the following patents: U.S. Patent Nos. 3,931,928, 3,955,757, 4,175,040, 4,525,155, 4,634,416, 4,816,152, 4,959,158, 5,024,647, 5,762,800, 6,346,069, 6,607,473, 6,719,681. The disclosures of these patent documents are incorporated herein, in their entireties, by reference thereto. Additional information may be found, for example, at the website for Costner Industries at www.cit-ind.com. Additional related information may be found at the web pages of Auxill Nederland BV, a distributor of the CINC separators (also referred to as CIT liquid-liquid centrifuges) (see www.auxill.nl/uk/cit.separators.php).

In addition to the CINC centrifugal separators, centrifugal separators or extractors are also available from Roussel-Robatel of Annanoy, France, such as, for example, such as the Centrifugal Separator, Model 8XP or Model BXP 360P. Other sources of centrifugal extractors will be well known to the practitioner.

These centrifugal separators may be used in any of the sizes available and in any of the forms offered by their vendors. For example, models of the CINC centrifugal contact-separators come in sizes ranging from 0.5 gal. per min. (1.9 liter/min) (Model V-02) to 600 gal/min (2271 l/m) (Model V-36) with intermediate ranges of 6 gpm (22.7 lpm) (Model V-05), 30 gpm (113.5 lpm) (Model V-10), 90 gpm (340.6 lpm) (Model V16) and 200 gpm (757 lpm) (Model V-20).

Although often less convenient it is also possible, in accordance with embodiments of the invention, to use, instead of centrifugal contact-separators, separate fast mixing and fast separating devices wherein a continuous flow of two substantially immiscible liquid streams may be processed.

In one embodiment of the invention two centrifugal contact-separators are used as shown in the set-up schematically illustrated in Fig. 1.

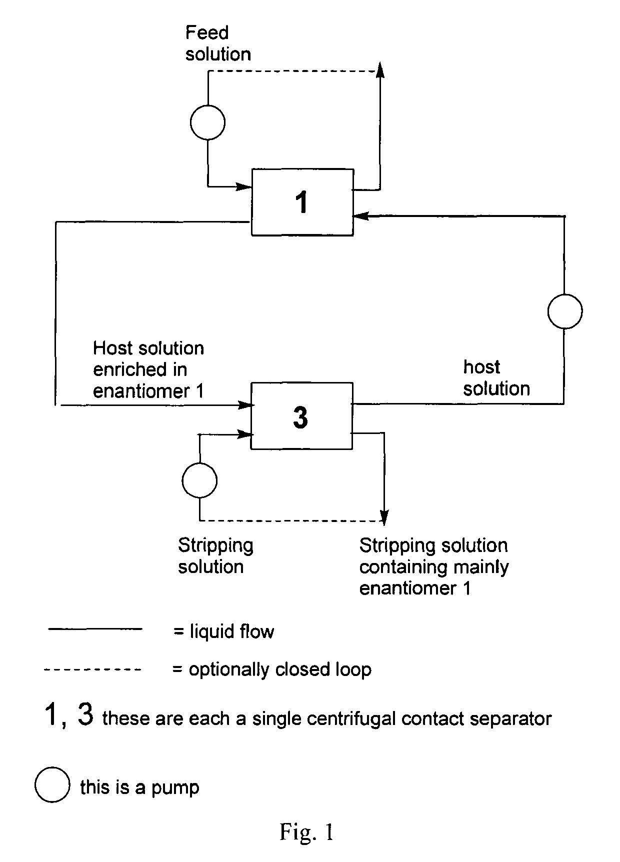

For convenience, the following description may sometimes refer to the centrifugal contact-separators as CINC apparatus although it will be understood that any other high speed centrifugal contact-separator, such as the Rousselet-Robatel centrifuge separators and extractors, may be used.

In a preferred embodiment of the invention, each of the centrifugal contact-separators comprises a rotor having a rotor wall and opposed first and second end portions, at least two fluid inlets and at least two fluid removal sections attached to the rotor.

According to an embodiment of the invention, using a centrifugal contact-separator as described, the process for enrichment and/or separation of an enatiomer mixture in a feed solution may be carried out by continuously introducing the feed solution into a first inlet of at least a first centrifugal contact-separator; continuously introducing a host solution containing a chiral host into a second inlet of the first centrifugal contact-separator; rotating the rotor to substantially simultaneously cause (a) mixing of the feed solution and host solution and (b) radial separation.

As a result of the rotation, the resulting mixture from (a) is forced outward to the rotor wall forming at least two liquid layers so that the liquid layer adjacent to the rotor wall has the greatest relative density and the successive layers approaching the rotor's rotational axis have successively lower densities so that interfaces form between each separated layer and wherein the first and second enantiomers are differentially distributed in each respective separated liquid layer. The individual liquid layers are continuously removed by flowing each liquid into a liquid removal section.

Accordingly, a feed solution with an increased relative concentration of the second enantiomer is removed from one liquid removal section and host solution having an increased relative concentration of the first enantiomer is removed from a second liquid removal section.

In still a further feature of this embodiment, the process includes continuously introducing the host solution having an increased relative concentration from the second removal section of the first rotor of the at least a first centrifugal contact-separator to a first inlet of a rotor of at least one second centrifugal contact separator. A stripping solution which is at least substantially miscible with the feed solution and at least substantially immiscible with the host solution and having a different density than the host solution is continuously introduced into a second inlet of the second centrifugal contact-separator.

As with the operation in the at least one first centrifugal contact-separator, rotating the rotor of the second centrifugal contact-separator causes, substantially simultaneously, (c) mixing of the host solution and stripping solution and (d) radial separation, wherein the resulting mixture from (c) is forced outward to the rotor wall forming at least two liquid layers so that the liquid layer adjacent to the rotor wall has the greatest relative density and the successive layers approaching the rotor's rotational axis have successively lower densities so that interfaces form between each separated liquid and wherein the first and second enantiomers are differentially distributed in each respective separated liquid layer.

Thereafter, the individual liquids are recovered from a fluid removal section, whereby stripping solution having an increased relative concentration of the second enantiomer is removed from one fluid removal section and host solution having an increased relative concentration of the first enantiomer is removed from a second fluid removal section.

As shown in Fig. 1, this arrangement includes an embodiment wherein there are three closed loop cycles, one for each of the feed solution, host solution and stripping solution. That is, the output of the feed solution is return to, for example, the supply source (not shown) of the feed solution used as the input to the centrifugal contact-separator "1" and similarly, the output of the stripping solution from the centrifugal contact-separator "3" is returned to the supply source (not shown) of the stripping solution. However, it is also possible to operate this arrangement whereby only the host solution traverses the two centrifugal contact-separators in a closed loop while the feed solution and the stripping solution may be continuously recovered in separate vessels from the outlets of the respective centrifugal contact-separators "1" and "3" or shipped directly for further processing. For example, the stripping solution may be continuously or intermittently subjected to conventional separation and recovery of the enriched first enantiomer (enantiomer "1"), such as by fractional crystallization.

The embodiment illustrated schematically in Fig. 1, provides an arrangement ideal for simple separation using two centrifugal contact-separators ("units"). In this set-up the feed solution is pumped into the first unit where it is intimately mixed with the host solution containing the chiral host compound (also known as chiral activator or chiral catalyst). The two layers are separated in the centrifuge part of the unit after which the layers leave the unit through the two outlets. The host solution is continuously circulated through both units. In the second unit, the backwashing solution (receiving solution) is continuously pumped through to extract the enantiomerically enriched compound from the host solution. The enriched enantiomer can be isolated from the backwashing solution by conventional means, such as evaporation, crystallisation, extraction and the like (not shown).

The set-up illustrated in Fig. 1 works best when used with very selective host compounds or where only a small amount of material is needed which is enriched in one of the enantiomers. As the feeding solution becomes depleted in one enantiomer the difference in concentration of the two enantiomers will lead to a gradual increase in transportation of other, sometimes unwanted, enantiomer. Therefore, either of the following approaches may be used in combination with this embodiment.

Approach 1: The feed solution may be continuously racemised, whereby the composition will always remain 50:50 and thus the enantioselectivity of the transported material will always remain the same. Existing racemisation agents and processes can be used for this purpose. The racemisation can take place during the process in the feeding solution or alternatively the feeding solution may be simultaneously fed through a reactor were the racemisation takes place. For example, amine enantiomer may be racemised by, for example, treatment with metal catalysts such as Ra-Ni or Pd on carrier materials at higher temperatures. Alternatively, homogeneous transition metal complexes may be used. Amino acid derivative enantiomers can be racemised, for example, through the addition of aldehydic compounds, such as salicaldehyde or pyridoxal. Acidic compound enantiomers can be racemised by, for example, treatment with strong bases at higher temperatures while alcohols can be racemised through, for example, the use of ruthenium complexes in catalytical amounts. These and other racemisation processes have been described in the literature and are known to one skilled in the art.

Approach 2: The feed solution may be simultaneously fed through a duplicate set-up of two centrifugal separator/extractor units that contain a solution of a host compound with the opposite configuration of the one in the first set-up. This way both enantiomers are transported out of the feed solution at the same rate.

Another embodiment of the invention, which is particularly effective for the substantially complete separation of racemates, may be carried out using apparatus such as illustrated in Fig. 2.

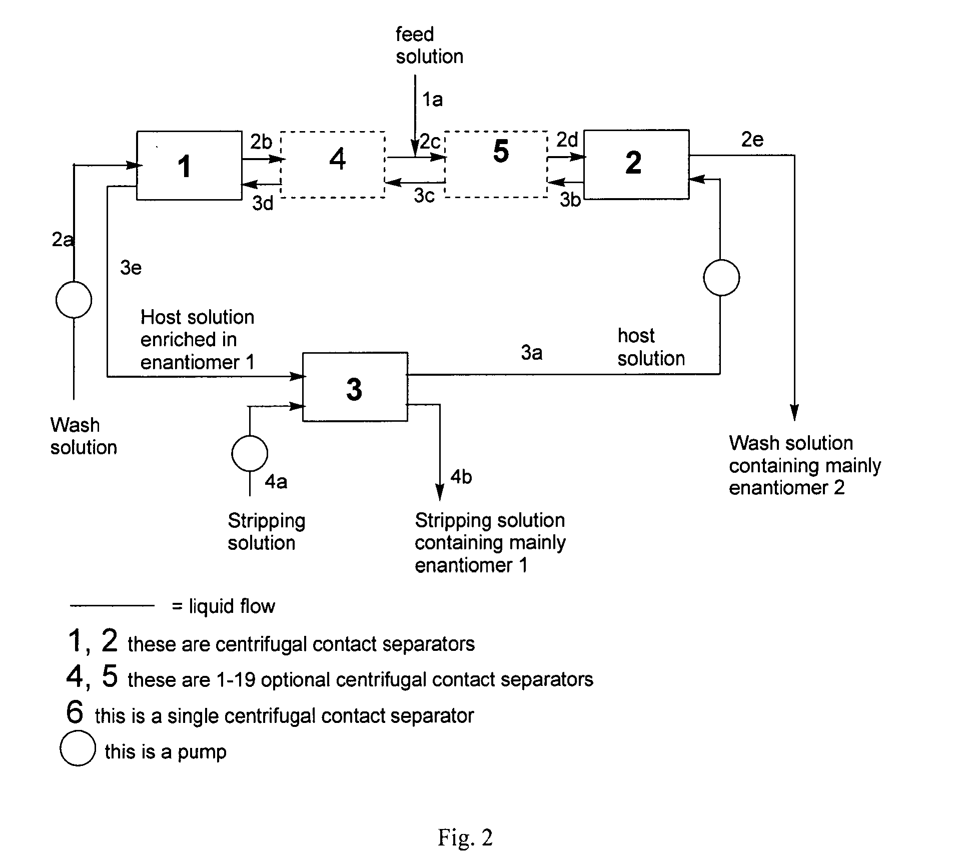

According to this embodiment, the continuous enrichment and/or separation of enantiomers from a mixture thereof in a feed solution, comprises
(A) continuously introducing the feed solution (via line 1a) to at least one first centrifugal contact-separator (1);
(B) continuously introducing a washing solution (via line 2a) to the at least one first centrifugal contact-separator ("1");
(C) transferring the washing solution from the at least one first centrifugal contact-separator to at least one second centrifugal contact-separator ("2");
(D) introducing a host solution (via line 3a) containing a chiral host, which preferentially binds to one of the enantiomers of said enantiomeric mixture, to the at least one second centrifugal contact-separator ("2");
(E) transferring the washing solution (via lines "2b", "2c" and "2d") from the at least one second centrifugal contact-separator to the at least one first centrifugal contact-separator;
(F) subjecting the washing solution and the host solution to mixing followed by centrifugal force within each of the at least one first and at least one second centrifugal contact-separators to effectively contact the liquids and cause preferential transfer of the first enantiomer, as its complex with the chiral host, into the host solution;
(G) withdrawing the washing solution (via line "2e") from the at least one second centrifugal contact-separator ("2");
(H) transferring the host solution (via line "3e") from the at least one first centrifugal contact-separator ("1") to a stripping zone; and
(I) stripping the host solution (in the stripping zone "3", which may and preferably is a single centrifugal contact-separator) to preferentially recover the first enantiomers from its complex therein without substantially removing the chiral host; wherein the host solution from step (I) after stripping comprises the host solution introduced (via line "3a" and "3") into the at least one second centrifugal contact-separator ("2") in step (D) whereby the host solution flows counter-currently, with respect to the flow of the washing solution, in a closed loop.

As also shown in Fig. 2, any additional number, usually between 1 and 19, centrifugal contact-separators (shown at "4") may be arranged in series with the first centrifugal contact-separator "1" and any number, also usually between 1 and 19, centrifugal contact-separators (shown at "5") may be arranged in series with the second centrifugal contact-separator "2". Preferably, the number of additional contact-separators represented by **"4"** is the same as the number of additional contact-separators represented by **"5".**

Again with reference to Fig. 2, the present invention, in one embodiment thereof, provides apparatus for separating one enantiomer from a mixture of enantiomers in a feed liquid. The apparatus preferably comprises:
a rectification zone ("2", "5") comprising at least one centrifugal contact-separator;
a washing zone ("1", "4") comprising at least one centrifugal contact-separator;
a stripping zone ("3");
a closed loop flow line (3, 3b, 3c, 3d, 3e, 3a) for transporting a host solution containing a chiral host through the at least one centrifugal contact-separator in the rectification zone, the at least one centrifugal contact-separator in the washing zone and the stripping zone;
a first flow line (2a, 2b, 2c, 2d, 2e) for transporting a washing solution through the centrifugal contact-separators in the stripping zone and the rectification zone; and
a second flow line (1) for introducing the feed solution into the first flow line intermediate the stripping zone and the rectification zone; and,
a third flow line (4a, 4b) for transporting a stripping solution through the stripping
zone.

The apparatus may further comprise a first pump for pumping a washing solution via the first flow line first through the stripping zone and then through the rectification zone in that order.

The apparatus may further include a second pump for pumping a host solution via the closed loop flow line through the rectification zone, the washing zone and the stripping zone in that order. In one embodiment, the second pump is arranged to cause the receiving liquid to flow through the closed loop flow line in counter-current direction to the flow of the washing solution through the first flow line.

In a preferred embodiment the washing zone and the rectification zone each comprise at least two centrifugal and up to about 20 serially arranged centrifugal contact-separators.

In practice, using an arrangement, such as shown in Fig. 2, two or more centrifugal contact-separators are arranged in series with the feed solution of the enantiomeric mixture preferably continuously introduced to one of the contact-separators, preferably between two of the serially arranged centrifugal contact-separators, e.g., between the stripping section and the raffinating or rectification section. A stripping zone, which may, for example, comprise another centrifugal contact-separator, is provided to continuously strip one of the enantiomers from the enriched host solution, preferably without substantially removing the chiral host. The washing solution continuously passes in one direction through each of the serially arranged contact-separators. The host solution continuously flows in a closed loop, countercurrently with respect to the direction of flow of the washing solution, through each of the serially arranged centrifugal contact-separators and the stripping zone.

The number of centrifugal contact-separator units according to this embodiment is limited only by the investment costs, but generally from 1 to 20 such contact-separators may be used in each of the washing and rectification zones.

Preferably, the feed solution is introduced intermediate the washing and rectification zones. However, the feed solution may also be introduced at an intermediate location in the washing or rectification zones, such as to the line 2b or line 2d. Furthermore, it is also within the scope of the invention to introduce the feed solution directly to one of the centrifugal contact separators, whether in the washing zone or the rectification zone.

In each centrifugal contact-separator, a countercurrent extraction takes place where one liquid stream containing the host solution (as shown, the closed loop section flows counterclockwise, through each of the serially arranged centrifugal contact-separators 2-(5)-(4)-1, and through the stripping zone "3" and the other liquid stream containing the washing solution (as shown, flowing from right to left through contact-separators 1-(4)-(5)-2. The enantiomer that binds preferentially to the host solution is continuously enriched as the host solution flows upstream past the units (5)-2 (rectification zone), where washing of the possibly less or unwanted enantiomer takes place. The host solution, on the other hand, becomes progressively enriched in the enantiomer that binds more strongly to the chiral host compound. If the host compound has sufficient separation power the number of units needed to obtain solutions containing pure enantiomers (>99% e.e.) can be kept low. This number will usually be somewhere between 2 and 20, especially, between 4 and 20, for example between 4 and 10 centrifuge units in each of the washing and rectification zones. A typical example may have 10 serially arranged units, e.g., five in the rectification zone and five in the washing zone.

Once the host solution flows through the last unit ("1") only a single or substantially only a single enantiomer will be bound to it. This enantiomer is removed in the stripping zone ("3"). Here the thermodynamic incentive of the stripping solution is set in such a way that all or, at least substantially all, of the bound enantiomer is removed from the host solution, without substantially removing the chiral host compound.

Likewise, once the washing solution that optionally is introduced flows through the last centrifugal contact-separator unit ("2") it will contain only or substantially only the other enantiomer. This solution may be collected and the pure or enriched other enantiomer may be removed from it by conventional means, e.g., crystallization (not shown).

In this fashion it will always be possible to obtain both enantiomers in pure form.

In this regard, it is understood that while for many or most commercial applications pure (*i*.*e*., e.e. values > 99.9%) are required, in embodiments of the present invention it is sufficient if the e.e. value of the enriched enantiomer is at least about 50%, usually, at least about 80%, such as, for example, at least about 85%, or at least about 90%, or at least about 91% or 92% or 93% or 94% or 95% or 96% or 97% or 98% or 99%. As is known in the art, once the enantiomeric enrichment reaches at least about 80% e.e., separation and recovery of the enriched enantiomer by more conventional means, such as fractional distillation, fractional crystallization, chromatography, becomes feasible.

As noted above, although a total of at least two, preferably at least four serially arranged centrifugal contact-separators may, in principle, be sufficient to achieve at least 80% e.e., each additional centrifugal contact-separator will increase the enantiopurity of the separated enantiomers. However, from a practical matter, it is generally believed that using more than about 20 contact-separators will not result in a concommitant increase in performance.

If, however, only one enantiomer is needed it is possible to subject the unwanted enantiomer to a racemisation reaction, such as described above, in connection with the embodiment using a set-up of centrifugal contact-separators, such as schematically illustrated in Fig. 1. This racemisation reaction can be performed off-line or it may optionally be added as part of the set-up as generally shown in Fig. 2.

The selectivity of the host for any given substrate and the extent of separation or purification desired are factors which will help the practitioner determine the number of centrifuge units needed.

Moreover, in embodiments of the invention the total number of serially arranged contact-separator units is selected to be an even number, such as 4, 6, 8, 10, 12, 14, 16, 18 or 20, with an equal number of centrifugal contact-separators in each of the washing zone and the rectification zone.

With the process according to the various embodiments of the invention, generally any of the various types of racemates can, in principle, be enantiomerically enriched and/or separated using various types of chiral hosts and liquid solvents or carriers. The various constituents which may be suitably used according to the embodiments of the invention will now be described by illustrative embodiments, although it is understood that the invention is by no means limited to the materials described below.

### Racemates

The racemates that may suitably be enantiomerically enriched and/or separated include, for example, basic, acidic and neutral compounds. Examples of basic compounds as racemates include, for example, amines such as 2-butylamine, α-methylbenzylamine, α-methyl-naphthylamine and substituted variants thereof, α -amino-caprolactam, diamines, such as *trans*-1,2-diamino-cyclohexane, substituted pyrrolidines, piperidines and piperazines, such as, 2-phenyl-piperidine, 3-hydroxypyrrolidine or amino acid esters such as methyl piperazine-2-carboxylate, *tert*-butyl tryptophanate, benzyl valinate or aminoalcohols such as prolinol, *tert*-leucinol, phenylalaninol, quinuclidinol, anilines, such as 2,2'-diamino, 1,1'-binaphthyl. They may be entered in the separation process as neutral compounds or in the form of their salts or in a quaternised charged form. For basic compounds it is advantageous to use a chiral host that contains an acidic functionality for instance a carboxylate, a phosphonate or a sulfonate. The host may also contain an anionic group.

Examples of acidic compounds as racemates include, for example, carboxylates such as ibuprofen, naproxen, flurbiprofen, mandelic acid, malic acid, panthotenic acid, *rac*-biotine, chrysanthemic acid, citramalic acid, citronellic acid and the like, N-protected amino acids, such as N-acetyl-phenylalanine, BOC-tyrosine, 3,5-dinitrobenzoyl-leucine, phosphonates, such as α -methyl-benzylphosphonic acid or sulfonates such as α -methyl-naphthylsulfonic acid. In this case it will be advantageous to use a chiral host containing a basic or a protonated basic functionality. The host may also contain a positive charge, of which ammonium, and sulfonium salts are very suitable. Cationic metal complexes may also be used.

The racemates may also be neutral compounds, for instance alcohols such as 2-octanol, α-methyl benzylalcohol, epoxides such as methyl 3-*p*-methoxy-phenyloxirane-2-carboxylate, glycidol, 2-chloromethyloxirane, glycidyl tosylate, styreneoxide, esters such as ethyl 2-hydroxy-4-phenylbutyrate, ketones such as carvone, nitriles such as m-phenoxybenzaldehyde cyanohydrin and the like. In this case a neutral host can be used, although sometimes acidic or basic host compounds can also be used.

Often hydrogen bonds are very important in selective binding phenomena. Thus it may be advantageous to add a temporary protecting group that contains a good hydrogen bond donor or acceptor to the racemate.

### Solvents

The enantiomer feed mixture, which will typically be in the form of its racemate, will be dissolved in the feeding solution. In a simple set up with two centrifugal separator/extractor units, such as shown in Fig. 1, the liquid system to be subjected to continuous liquid-liquid extraction, will include a feed solution, a stripping solution and the chiral host solution. In the embodiment as illustrated in Fig. 2, an additional and optional washing solution is also provided.

The host solution containing the chiral host is immiscible with the feeding and the washing/stripping solutions. In one embodiment of the invention, the solution containing the host may be based on an organic solvent (other than, for example, a lower alcohol or acetonitrile or other aqueous miscible organic liquid); in this case the feeding and the washing/stripping solutions could be aqueous. Representative examples of such an organic solvent include alkanes, e.g., heptane, aromatics, e.g., toluene, halogenated solvents, e.g., chlorobenzene, dichloromethane, chloroform, dichloroethane, aliphatic ethers, e.g., methyl *tert*-butylether, and the like.

In another embodiment, the chiral host compound is in an aqueous solution while the feeding and the stripping phase may each be based on an organic solvent (such as, for example, any of those mentioned above).

In another embodiment it is possible to dissolve the host in a very nonpolar solvent such as heptane, which may be modified with small amounts of other solvents, such as, for example, *n*-octanol, to increase the solubility of the host compound. In case a very nonpolar solvent like heptane is used for the host, the feeding and the stripping solutions may be a very polar solvent such as acetonitrile, butanediol, glycerol, propanediol, methanol or alcohol water mixtures. It is also possible in embodiments of the invention, to use fluorous solvents for one phase and toluene or hexane or an other solvent that is immiscible with a fluorous solvent for the other phase(s). Likewise it is possible to use ionic liquids as solvent for one phase and an organic solvent immiscible with said ionic liquid for the other phase(s).

In addition to the requirement that the respective solvents for the host solution, on the one hand, and the feed and receiving/stripping/extraction solvents, on the other hand, are at least substantially immiscible with each other, the respective phases will, also preferably, be of different density to thereby facilitate separation in the centrifugal contact-separators. For example, for an aqueous phase having a density of about 1 g/ml, an organic solvent phase may have a density in the range of from about 0.5 to 0.9 g/ml or a density in the range of from about 1.05 to 1.3 g/ml.

The aqueous solutions are usually buffered; for this purpose conventional buffers such as phosphate buffers can be used in concentrations adequate to retain the pH at the desired value. The pH of the solution of all phases may have strong effect on the rate of transport and the enantioselectivity. It is thus preferred to fine-tune the pH in every case to suit that particular combination of racemate and chiral host compound. In the washing/stripping solution some thermodynamic incentive usually is included to promote fast transfer to this phase. This may be a drop or rise in pH relative to the feeding solution, it may be a temperature drop or a cation or anion, which is added to the stripping solution or the optional washing solution that travels in the reverse direction to balance the electrolyte. For instance, when a carboxylate is transported it may be advantageous to add KBr to the stripping phase. In this way the bromide migrates in the reverse direction as the carboxylate, thus maintaining electrolytic balance. The concentration of the salt again needs to be carefully optimized. If the concentration is too high the host will be fully saturated with the cation or anion thus not leaving space for the anionic or cationic racemate. On the other hand, if the concentration of the salt is too low the transport may also become slower. It is also possible to work with a stripping solution or washing solution that contains no thermodynamic incentive. In this case the concentration difference drives the transport.

### The chiral host compound

The chiral host compounds that can be used may be quite diverse. In fact, many different host compounds have already been published in the literature. In general, host compounds that work in simple separation set-ups such as U-tubes or membranes can also advantageously be used in the process of the invention.

Some examples of hosts that can be used advantageously include:
Cinchona alkaloids and their derivatives, for example, those shown by the following formula (1):

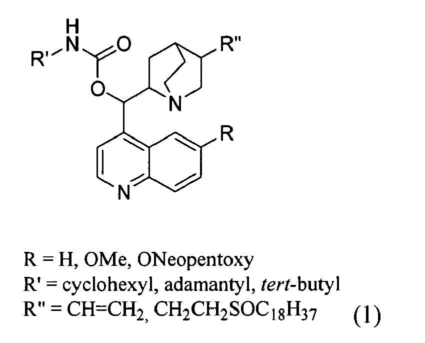

These host compounds can be used for the separation of racemic carboxylic acids or amino acid derivatives.

Chiral crown ethers can be used for the separation of salts of amines or salts of amino acid esters or sodium or potassium salts ofN-protected amino acids. Some examples include: 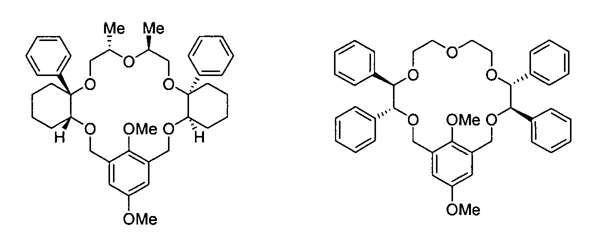 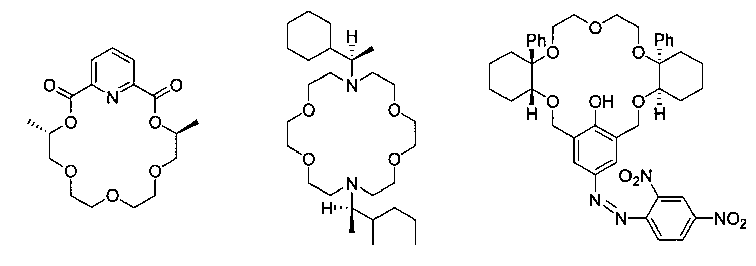 It is also possible to use chiral guanidinium salts as hosts, for instance: 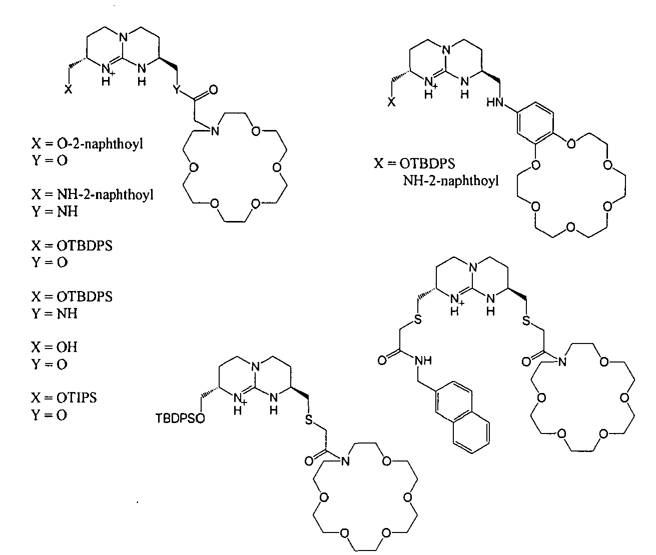 Cholic acid compounds can also be used. Acidic or basic functionalities can easily be introduced into these molecules. 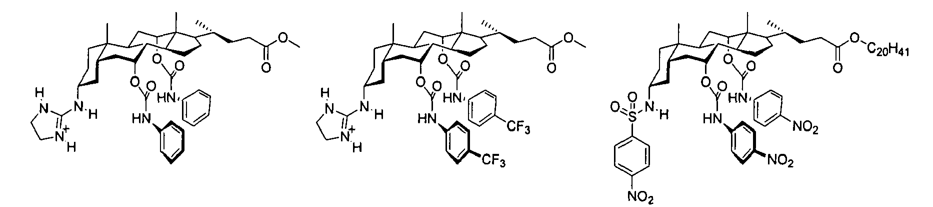 Differently substituted calixarenes can be used like the structures below: 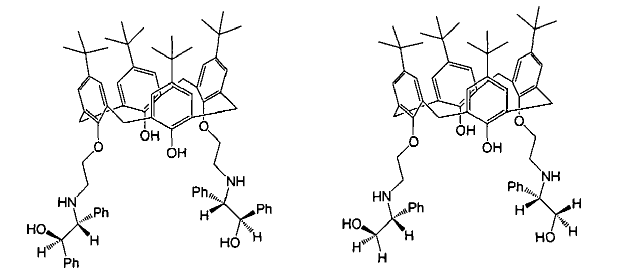 In this case the compounds carry basic functionalities which makes them particularly suited for the separation of acids, such as for instance mandelic acid.
Substituted binaphthol compounds are also very suitable host compounds in view of the many possible structural modifications and their chemical stability. Below are some examples: 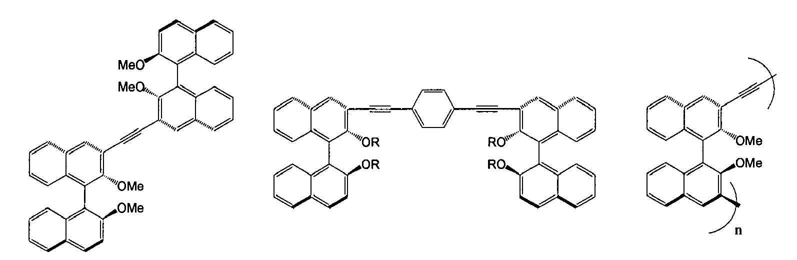 Simple host structures can also be very efficient. The following amino acid based chiral host compounds can be used for the separation of N-3,5-dinitrobenzoyl substituted amino acids: 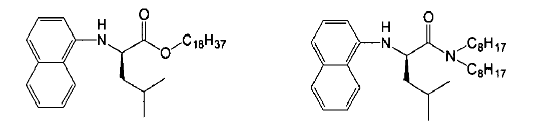 Also simple substituted imidazoles can be very effective. An example is the use of the following compound that can be used for the separation of carboxylates. 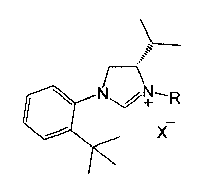 Chiral acids based on phosphate, phosphite, phosphinite or phosphonite can also be used advantageously, particularly to separate racemic amines or amino acid esters. Examples include: 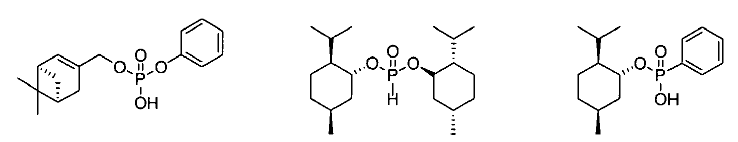 For the separation of amino alcohols and beta-amino acid derivatives the following host compound is extremely suited: 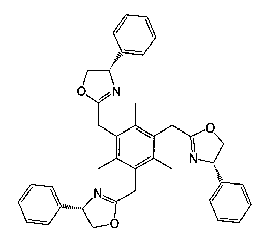 A variety of metal complexes can also be advantageously used as chiral host compound. In principal all metals that form stable complexes can be used. Some examples of complexes that can be used as chiral host compound include:

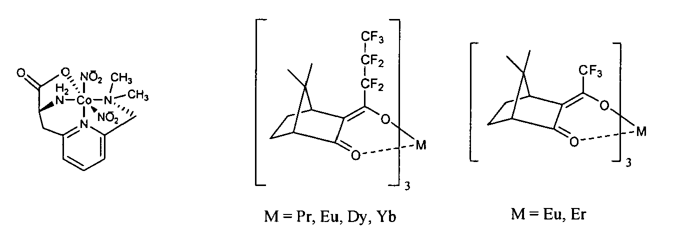

### Examples

### Experiments 1-17

The chiral hosts based on cinchona alkaloids were synthesised as described by W. Lindner, M. Lämmerhofer, N. Maier (WO 97/46557, 11-12-97).

Using the set-up shown in Fig. 1, the aqueous phases and the organic phase are fed into the CINC extractors and, the aqueous phases, after separation from the organic phase, are returned to their original containers (not shown). Two CINC units and three peristaltic pumps are employed in the setup for extraction experiments. Each of the centrifugal CINC units include two inlets and two outlets for the light and heavier phases. In these experiments an aqueous solution is used as the light phase (in the feed and stripping solutions) and 1,2-dichloroethane is used as the solvent for the host solution (as the heavy phase).

The feed solution, the host solution and the stripping solution are each driven by a peristaltic pump.

Experiments 1-17 demonstrate that it is possible to separate N-3,5-dinitrobenzoyl -substituted amino acids, using various cinchona alkaloid based hosts and varying several conditions such as concentrations flow rates and rpm of the CINC's. Unobtrusive changes are highlighted in bold in Table 1.

### Conditions for CINC extraction experiments (Exps. 1-17)

For the CINC extraction experiments 1-17, two CINC model V2 separators are employed using the recycle setup (closed loops) shown in Fig. 1. The feed solution and host solution are pumped into the first CINC ("1") using peristaltic pumps (Watson Marlow 101U/R) set at 70 rpm giving a flow rate of 625 ml/min for each phase. After mixing and separation of the phases, the aqueous phase is returned to the original feed solution, whereas the organic phase is transferred to a second CINC model V2 separator ("3"). The stripping solution is pumped into the second CINC model V2 separator using a peristaltic pump (Watson Marlow 101U/R) also set at 70 rpm giving a flow rate of 625 ml/min. After mixing and separation of the phases, the aqueous phase is returned to the original stripping solution container (not shown) and the organic phase is returned to the original host solution container (not shown). Therefore, there are three closed loops in the system, two aqueous and one organic.

The tubing used for the experiments is dependant on the solvents. For the aqueous phases, Marprene (Watson Marlow, 8 mm 5/16", serial number 902.0080.016) is used in the peristaltic pumps to drive the solutions to the CINCs. For the organic phase (chlorinated solvents), Viton (Watson Marlow, 8 mm 5/16", serial number 970.0080.016) is used in the peristaltic pump. All of the outlets of the CINCs are fitted with a chemically resistant T-tube, open to the air. The T-tubes allow air to enter the CINC in order to prevent a pressure build up.

The tubing used from the outlets of the CINCs is also dependant on the solvents. For the aqueous phase, Sta-Pure Silicone (Watson Marlow, 16 mm / 22 mm, serial number 910.0159.032) is used to return the phases to the original solutions, although any tubing can be employed for this. For the organic phase (chlorinated solvents), Íso-Versinic, Verneret (Merck Eurolab, 15 mm / 21 mm, serial number VERN770460-01) is used to transport the phase between the two CINCs and to return the phase to the original solution.

The experiment was started by setting the CINCs to the required rpm and pumping the host solution (organic phase) (the heavier phase) into the first CINC. After 5-10 seconds, the feed solution (aqueous phase) is also pumped into the first CINC. Once the aqueous solution is seen returning to the feed solution, the stripping solution is pumped into the second CINC. When only one phase is within the CINCs, the organic phase (host solution) will exit *via* the heavy phase outlet. This is the reason for starting the pumping of the (heavier) organic phase first.

The solutions are pumped continuously through the system for 3 hours during which time samples are taken from both the feed and stripping solutions. Samples are taken at 0, 2, 4, 6, 8, 10, 12, 14, 20, 30, 45, 60, 120 and 180 minutes and analysed by chiral HPLC.

For a typical experiment (Cinchona alkaloid extraction experiment: Experiment 1, the standard experiment), the feed solution consists of 3,5-dinitrobenzoyl-*d*,*l*-leucine (0.82 g, 5 mmol soln.) in distilled water (500 ml). The solution is at pH 6.5 using a phosphate buffer (0.1 M). The host solution contains *O*-(1-*tert*-butylcarbamoyl)-11-octadecylsulfinyl-10,11-dihydro-quinine (CAD) as chiral host (0.182 g, 0.5 mmol soln.) in 1,2-dichloroethane (500 ml). The stripping solution includes KBr (11.9 g, 0.1 M) in distilled water (1000 ml). The stripping solution is kept at pH 9 using a phosphate buffer (0.1 M).All solutions are pumped into the CINCs at 625 ml/min and the CINCs are set at 3500 rpm.

### Analysis of substrates

HPLC analysis of the 3,5-dinitrobenzoyl amino acids is carried out using a Chirobiotic T column (250 x 4.6 mm ID), from Astec Inc CAT 12024. A mixture of 75% acetonitrile, 25% methanol, 0.25% acetic acid, 0.25% triethylamine (polar ionic mode: pim mode) is used as eluent. The analysed samples contain 0.1 ml of feeding (or stripping) solution and 0.9 ml of eluent. The flow rate is set at 1.2 ml/min. The injection volume is 20µL and detection is performed using a spectrophotometer at UV 270 nm. All analyses are performed at ambient temperature.

All other experiments are performed as described above, with changes as highlighted in the table, or with a different host compound.

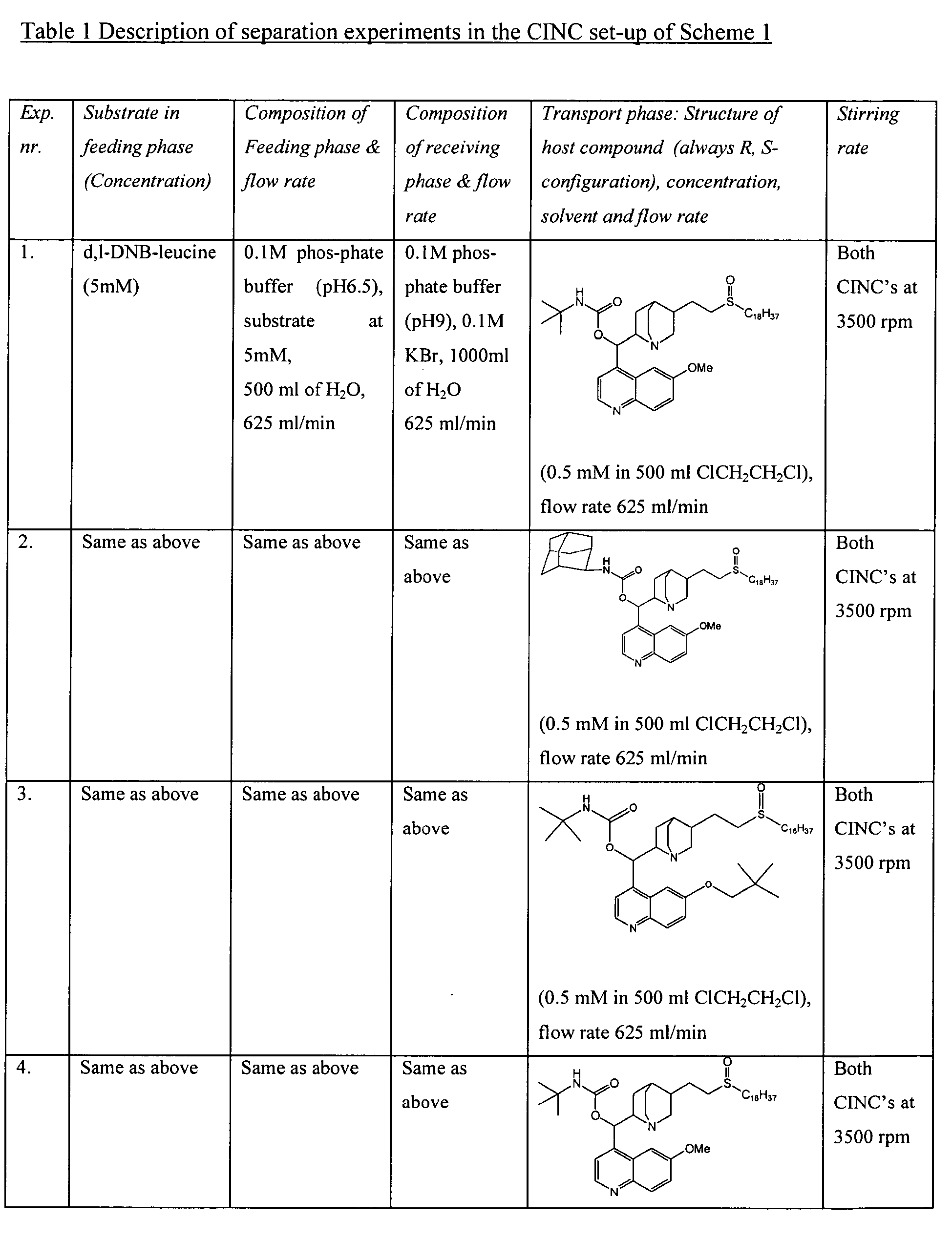

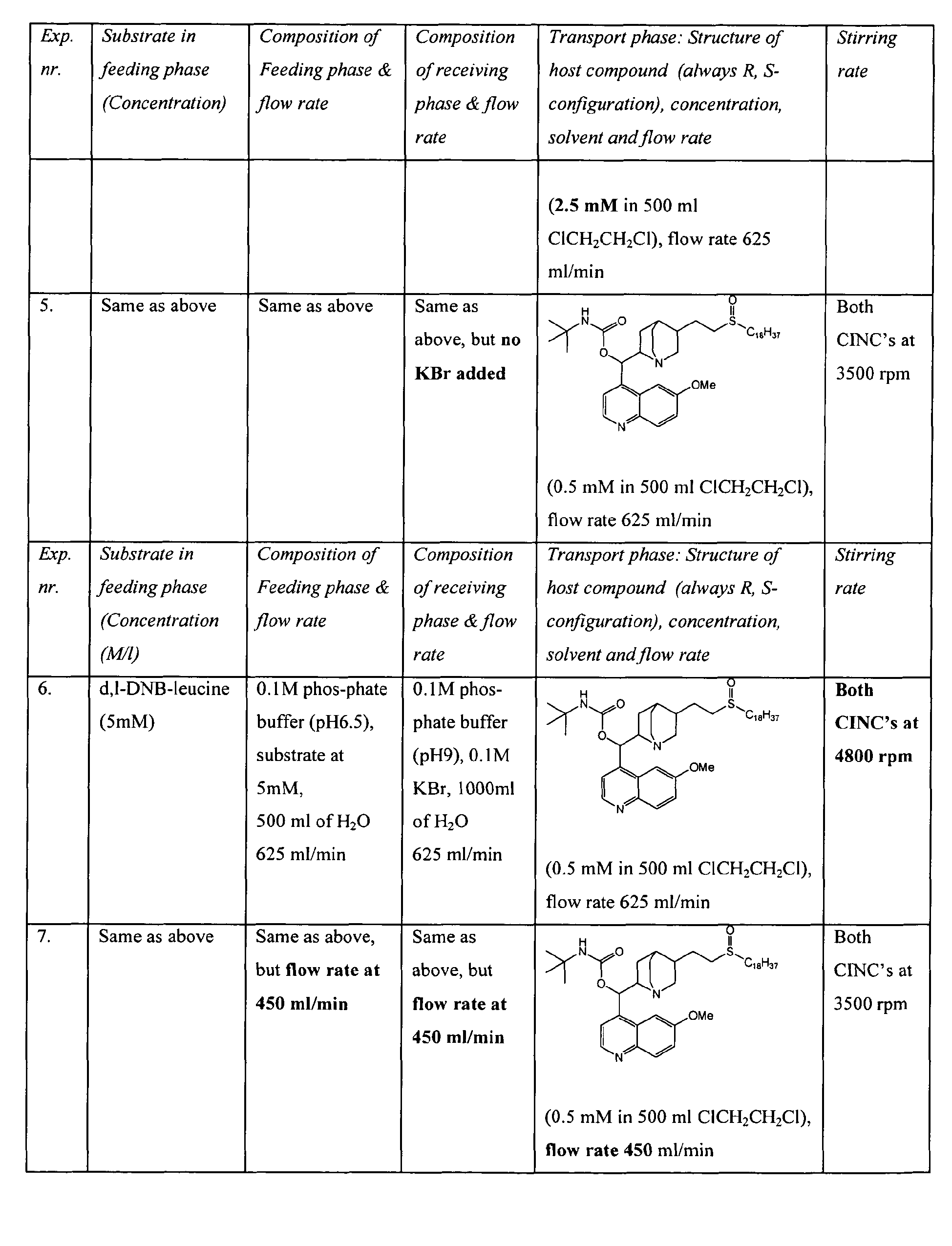

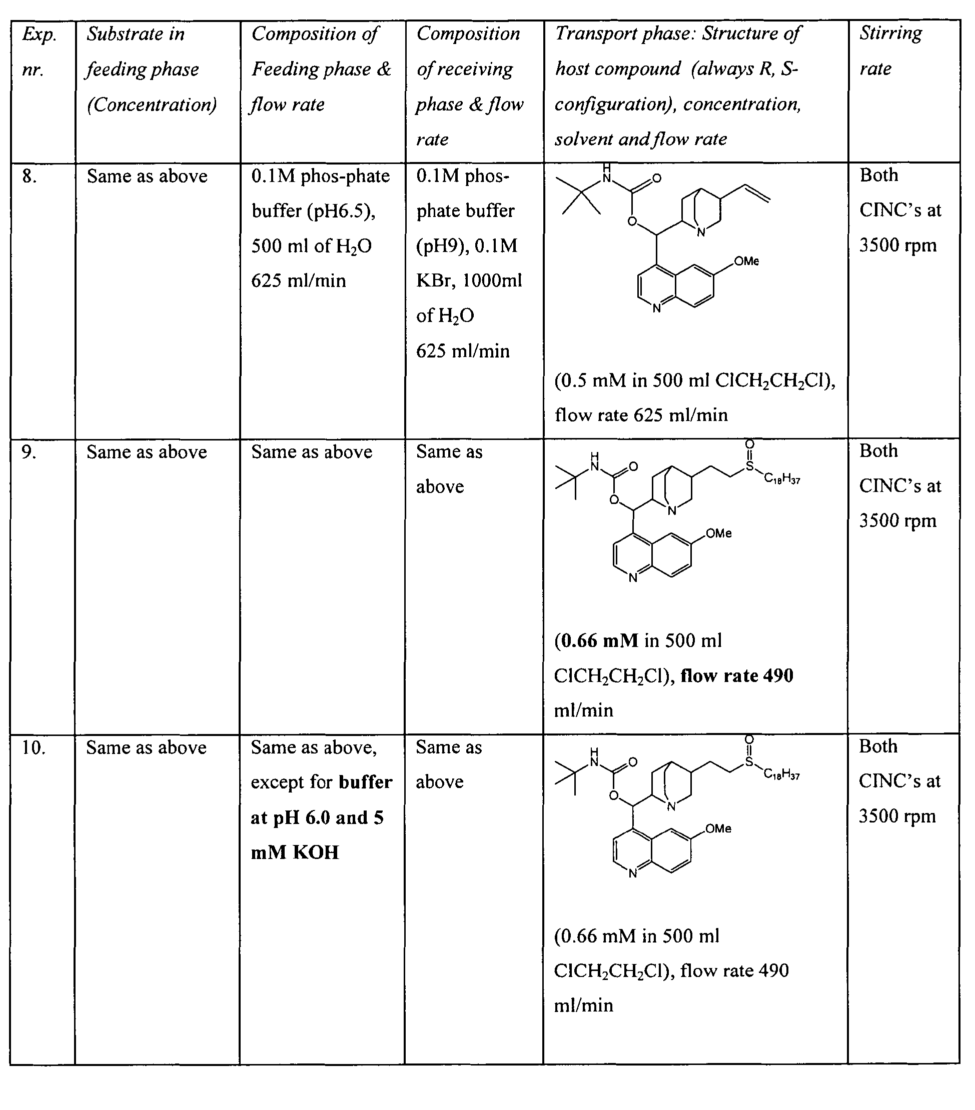

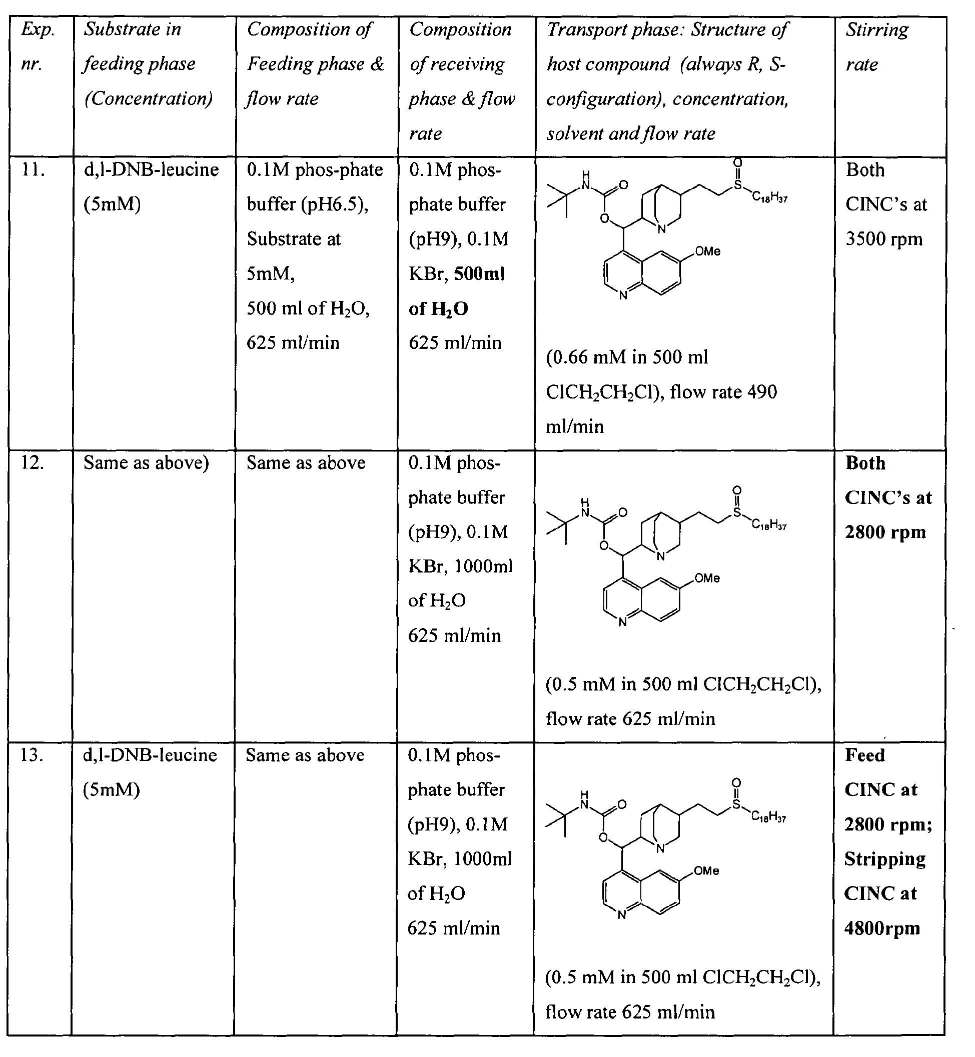

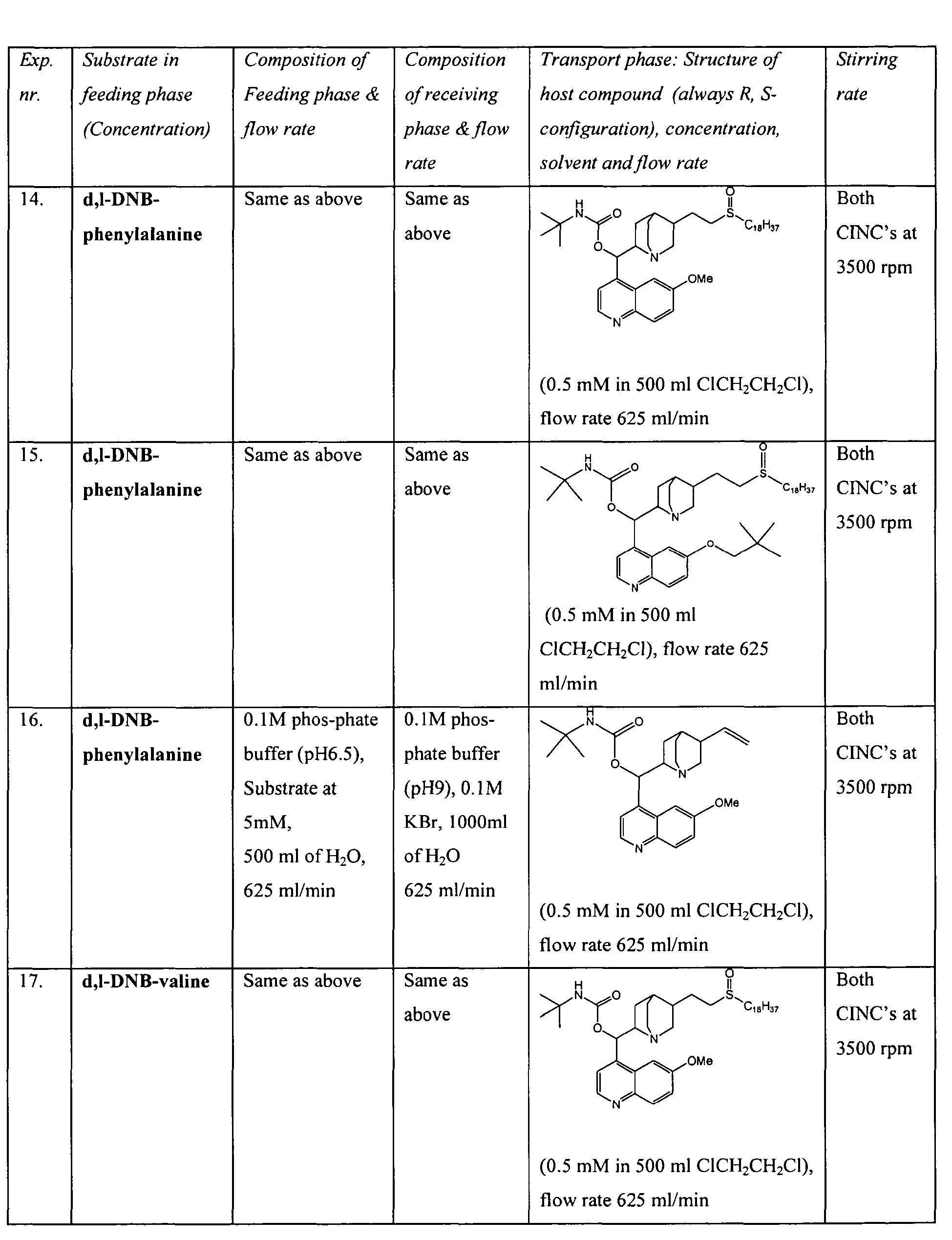

**Table 2 Results of Experiment 1**

| Time | % Feed DNB-d-leu | % Feed DNB-l-leu | % Receive DNB-d-leu | % Receive DNB-l-leu | Feed e.e | Receive e.e. |
|---|---|---|---|---|---|---|
| 0 | 100 | 100 | 0 | 0 | 3 | 0 |
| 1 | 97 | 98 | 1 | 0 | 2 | 100 |
| 2 | 95 | 96 | 3 | 0 | 2 | 100 |
| 3 | 91 | 96 | 5 | 1 | 0 | 84 |
| 4 | 92 | 97 | 8 | 3 | 0 | 49 |
| 5 | 90 | 96 | 12 | 4 | 0 | 51 |
| 6 | 84 | 89 | 14 | 5 | 0 | 48 |
| 7 | 83 | 89 | 17 | 6 | -1 | 50 |
| 8 | 81 | 88 | 19 | 6 | -1 | 52 |
| 9 | 78 | 85 | 23 | 8 | -1 | 50 |
| 10 | 76 | 86 | 24 | 7 | -3 | 56 |
| 12 | 69 | 84 | 30 | 12 | -7 | 44 |
| 14 | 68 | 85 | 34 | 13 | -9 | 46 |
| 16 | 62 | 83 | 38 | 16 | -12 | 43 |
| 18 | 59 | 77 | 44 | 18 | -10 | 43 |
| 20 | 55 | 76 | 47 | 21 | -13 | 40 |
| 25 | 43 | 70 | 56 | 28 | -22 | 36 |
| 30 | 36 | 65 | 65 | 33 | -26 | 35 |
| 45 | 18 | 52 | 78 | 45 | -47 | 29 |
| 60 | 9 | 37 | 96 | 63 | -59 | 23 |
| 90 | 2 | 18 | 100 | 79 | -83 | 14 |
| 120 | 1 | 9 | 99 | 89 | -84 | 8 |
| 180 | 1 | 2 | 99 | 90 | -46 | 7 |

**Table 3 Results of Experiment 2**

| Time | Receive DNB-1-leu | % Feed DNB-d-leu | % Feed DNB-1-leu | % Receive DNB-d-leu | % Receive DNB-1-leu | Feed e.e. | Receive e.e. |
|---|---|---|---|---|---|---|---|
| 0 | 0 | 100 | 100 | 0 | 0 | 3 | 0 |
| 2 | 11,1 | 85 | 92 | 10 | 3 | -1 | 59 |
| 4 | 25,6 | 75 | 87 | 20 | 6 | -5 | 53 |
| 6 | 37,3 | 67 | 84 | 28 | 9 | -9 | 52 |
| 8 | 52,7 | 59 | 80 | 37 | 13 | -12 | 49 |
| 10 | 67,3 | 52 | 75 | 45 | 17 | -15 | 48 |
| 12 | 87,7 | 45 | 71 | 53 | 22 | -20 | 44 |
| 14 | 98,5 | 39 | 68 | 58 | 25 | -24 | 42 |
| 20 | 140,5 | 25 | 56 | 75 | 36 | -36 | 38 |
| 30 | 208,7 | 11 | 39 | 88 | 53 | -53 | 28 |
| 45 | 261,5 | 5 | 24 | 97 | 66 | -64 | 22 |
| 60 | 294,7 | 3 | 17 | 98 | 75 | -66 | 16 |
| 90 | 336,8 | 2 | 7 | 98 | 85 | -45 | 10 |
| 120 | 340,6 | 3 | 3 | 96 | 86 | 1 | 8 |
| 180 | 357,8 | 3 | 1 | 97 | 91 | 40 | 6 |

**Table 4 Results of Experiment 3**

| Time | % Feed DNB-d-leu | % Feed DNB-1-leu | % Receive DNB-d-leu | % Receive DNB-1-leu | Feed e.e. | Receive e.e. |
|---|---|---|---|---|---|---|
| 0 | 100 | 100 | 0 | 0 | 3 | 0 |
| 1 | 97 | 96 | 3 | 0 | 3 | 100 |
| 2 | 92 | 95 | 4 | 0 | 2 | 100 |
| 3 | 92 | 94 | 6 | 0 | 2 | 100 |
| 4 | 91 | 94 | 9 | 0 | 1 | 100 |
| 5 | 88 | 92 | 10 | 2 | 0 | 74 |
| 6 | 86 | 94 | 12 | 2 | -2 | 69 |
| 7 | 83 | 91 | 15 | 3 | -1 | 68 |
| 8 | 83 | 92 | 17 | 5 | -2 | 56 |
| 9 | 79 | 91 | 19 | 4 | -4 | 66 |
| 10 | 77 | 89 | 21 | 5 | -4 | 65 |
| 12 | 76 | 89 | 24 | 6 | -5 | 60 |
| 14 | 71 | 85 | 27 | 7 | -7 | 59 |
| 16 | 68 | 85 | 32 | 11 | -8 | 50 |
| 18 | 67 | 84 | 34 | 11 | -8 | 53 |
| 20 | 62 | 82 | 35 | 11 | -11 | 56 |
| 25 | 55 | 77 | 44 | 15 | -14 | 52 |
| 30 | 48 | 76 | 51 | 18 | -19 | 50 |
| 45 | 32 | 65 | 70 | 27 | -31 | 46 |
| 60 | 20 | 58 | 80 | 38 | -45 | 37 |
| 90 | 8 | 40 | 99 | 57 | -66 | 30 |
| 120 | 4 | 27 | 98 | 69 | -76 | 20 |
| 180 | 2 | 10 | 100 | 89 | -67 | 9 |

**Table 5 Results of Experiment 4**

| Time | % Feed DNB-d-leu | % Feed DNB-l-leu | % Receive DNB-d-leu | % Receive DNB-l-leu | Feed e.e. | Receive e.e. |
|---|---|---|---|---|---|---|
| 0 | 100 | 100 | 0 | 0 | 2 | 0 |
| 1 | 87 | 91 | 6 | 2 | 0 | 50 |
| 2 | 81 | 90 | 10 | 4 | -3 | 49 |
| 3 | 71 | 81 | 13 | 5 | -4 | 47 |
| 4 | 66 | 78 | 16 | 5 | -6 | 53 |
| 5 | 63 | 78 | 18 | 6 | -8 | 52 |
| 6 | 61 | 77 | 22 | 9 | -10 | 46 |
| 7 | 57 | 73 | 24 | 11 | -10 | 39 |
| 8 | 53 | 70 | 27 | 11 | -11 | 44 |
| 9 | 56 | 78 | 32 | 14 | -14 | 42 |
| 10 | 51 | 71 | 33 | 14 | -14 | 42 |
| 12 | 47 | 69 | 38 | 19 | -17 | 37 |
| 14 | 42 | 65 | 44 | 21 | -20 | 39 |
| 16 | 38 | 62 | 50 | 25 | -21 | 35 |
| 18 | 33 | 55 | 53 | 28 | -23 | 34 |
| 20 | 30 | 55 | 58 | 32 | -26 | 32 |
| 25 | 24 | 49 | 74 | 42 | -31 | 30 |
| 30 | 19 | 46 | 75 | 47 | -38 | 26 |
| 45 | 9 | 30 | 88 | 60 | -53 | 21 |
| 60 | 5 | 22 | 93 | 71 | -61 | 16 |
| 90 | 2 | 9 | 97 | 89 | -57 | 7 |
| 120 | 2 | 5 | 100 | 96 | -43 | 4 |
| 180 | 2 | 2 | 96 | 92 | 9 | 5 |

**Table 6 Results of Experiment 5**

| Time | % Feed DNB-d-leu | % Feed DNB-l-leu | % Receive DNB-d-leu | % Receive DNB-l-leu | Feed e.e. | Receive e.e. |
|---|---|---|---|---|---|---|
| 0 | 100 | 100 | 0 | 0 | 2 | 0 |
| 5 | 89 | 86 | 11 | 3 | 4 | 58 |
| 10 | 77 | 78 | 21 | 9 | 1 | 43 |
| 16 | 66 | 75 | 33 | 15 | -5 | 40 |
| 25 | 50 | 63 | 48 | 24 | -9 | 35 |
| 30 | 43 | 59 | 57 | 30 | -14 | 32 |
| 45 | 26 | 47 | 71 | 40 | -26 | 29 |
| 60 | 16 | 35 | 83 | 52 | -35 | 25 |
| 120 | 2 | 6 | 97 | 82 | -40 | 10 |
| 180 | 2 | 1 | 93 | 88 | 24 | 5 |

**Table 7 Results of Experiment 6**

| Time | % Feed DNB-d-leu | % Feed DNB-l-leu | % Receive DNB-d-leu | % Receive DNB-l-leu | Feed e.e. | Receive e.e. |
|---|---|---|---|---|---|---|
| 0 | 100 | 100 | 0 | 0 | 6 | 0 |
| 5 | 83 | 91 | 11 | 4 | 1 | 50 |
| 10 | 70 | 86 | 23 | 11 | -4 | 41 |
| 16 | 56 | 76 | 38 | 20 | -9 | 36 |
| 25 | 38 | 63 | 54 | 30 | -19 | 34 |
| 30 | 31 | 54 | 67 | 46 | -21 | 25 |
| 45 | 13 | 35 | 85 | 63 | -40 | 21 |
| 60 | 6 | 17 | 84 | 68 | -44 | 17 |
| 90 | 2 | 5 | 94 | 93 | -46 | 7 |
| 120 | 1 | 2 | 96 | 96 | -56 | 6 |
| 180 | 1 | 0 | 88 | 88 | 100 | 6 |

**Table 8 Results of Experiment 7**

| Time | % Feed DNB-d-leu | % Feed DNB-l-leu | % Receive DNB-d-leu | % Receive DNB-l-leu | Feed e.e. | Receive e.e. |
|---|---|---|---|---|---|---|
| 0 | 100 | 100 | 0 | 0 | 5 | 0 |
| 5 | 84 | 88 | 7 | 2 | 3 | 55 |
| 10 | 78 | 84 | 15 | 7 | 2 | 42 |
| 16 | 68 | 80 | 23 | 11 | -3 | 40 |
| 25 | 57 | 72 | 36 | 20 | -7 | 32 |
| 30 | 53 | 72 | 42 | 24 | -10 | 32 |
| 45 | 38 | 55 | 58 | 37 | -14 | 27 |
| 60 | 23 | 45 | 71 | 48 | -27 | 25 |
| 90 | 10 | 26 | 87 | 70 | -40 | 16 |
| 120 | 4 | 14 | 93 | 83 | -52 | 11 |
| 180 | 1 | 2 | 96 | 91 | -36 | 8 |

**Table 9 Results of Experiment 8**

| Time | % Feed DNB-d-leu | % Feed DNB-l-leu | % Receive DNB-d-leu | % Receive DNB-l-leu | Feed e.e. | Receive e.e. |
|---|---|---|---|---|---|---|
| 0 | 100 | 100 | 0 | 0 | 6 | 0 |
| 5 | 79 | 91 | 14 | 6 | -1 | 47 |
| 10 | 64 | 78 | 29 | 13 | -4 | 42 |
| 16 | 52 | 72 | 41 | 20 | -10 | 40 |
| 25 | 35 | 60 | 59 | 30 | -21 | 38 |
| 30 | 30 | 62 | 71 | 42 | -30 | 31 |
| 45 | 15 | 41 | 84 | 57 | -43 | 24 |
| 60 | 5 | 24 | 85 | 70 | -60 | 15 |
| 90 | 3 | 11 | 96 | 87 | -52 | 11 |
| 120 | 2 | 3 | 96 | 96 | -10 | 6 |
| 180 | 1 | 0 | 96 | 96 | 26 | 6 |

**Table 10 Results of Experiment 9**

| Time | % Feed DNB-d-leu | % Feed DNB-1-leu | % Receive DNB-d-leu | % Receive DNB-1-leu | Feed e.e. | Receive e.e. |
|---|---|---|---|---|---|---|
| 0 | 100 | 100 | 0 | 0 | 5 | 0 |
| 2 | 85 | 89 | 8 | 2 | 2 | 67 |
| 4 | 77 | 85 | 12 | 4 | -1 | 49 |
| 6 | 70 | 79 | 19 | 8 | -1 | 47 |
| 8 | 65 | 77 | 25 | 10 | -4 | 46 |
| 10 | 59 | 73 | 29 | 13 | -6 | 44 |
| 12 | 53 | 67 | 37 | 15 | -7 | 45 |
| 14 | 50 | 66 | 42 | 19 | -10 | 42 |
| 20 | 36 | 55 | 55 | 27 | -16 | 38 |
| 30 | 23 | 43 | 68 | 38 | -26 | 33 |
| 45 | 12 | 29 | 84 | 55 | -37 | 25 |
| 60 | 7 | 19 | 85 | 61 | -43 | 21 |
| 90 | 3 | 7 | 93 | 81 | -28 | 11 |
| 120 | 3 | 2 | 93 | 87 | 19 | 8 |
| 180 | 3 | 1 | 91 | 86 | 55 | 8 |

**Table 11 Results of Experiment 10**

| Time | % Feed DNB-d-leu | % Feed DNB-l-leu | % Receive DNB-d-leu | % Receive DNB-l-leu | Feed e.e. | Receive e.e. |
|---|---|---|---|---|---|---|
| 0 | 100 | 100 | 0 | 0 | 5 | 0 |
| 2 | 83 | 87 | 8 | 4 | 3 | 40 |
| 4 | 69 | 78 | 18 | 9 | -1 | 38 |
| 6 | 63 | 75 | 24 | 12 | -4 | 39 |
| 8 | 54 | 68 | 36 | 18 | -7 | 38 |
| 10 | 47 | 63 | 42 | 22 | -10 | 36 |
| 12 | 42 | 59 | 48 | 25 | -12 | 35 |
| 14 | 35 | 54 | 55 | 30 | -16 | 34 |
| 20 | 21 | 39 | 67 | 42 | -26 | 27 |
| 30 | 8 | 23 | 84 | 61 | -44 | 21 |
| 45 | 4 | 11 | 79 | 66 | -48 | 14 |
| 60 | 3 | 5 | 83 | 75 | -26 | 10 |
| 90 | 3 | 2 | 83 | 77 | 30 | 9 |
| 120 | 3 | 1 | 85 | 81 | 70 | 8 |
| 180 | 3 | 0 | 85 | 81 | 75 | 8 |

**Table 12 Results of Experiment 11**

| Time | % Feed DNB-d-leu | % Feed DNB-l-leu | % Receive DNB-d-leu | % Receive DNB-l-leu | Feed e.e. | Receive e.e. |
|---|---|---|---|---|---|---|
| 0 | 100 | 100 | 0 | 0 | 4 | 0 |
| 2 | 91 | 98 | 4 | 0 | 1 | 82 |
| 4 | 87 | 95 | 8 | 1 | 0 | 73 |
| 6 | 83 | 92 | 13 | 4 | -1 | 59 |
| 8 | 79 | 90 | 17 | 7 | -2 | 47 |
| 10 | 74 | 89 | 21 | 9 | -5 | 46 |
| 12 | 70 | 86 | 26 | 10 | -6 | 48 |
| 14 | 66 | 84 | 30 | 13 | -8 | 43 |
| 20 | 55 | 78 | 42 | 19 | -13 | 42 |
| 30 | 40 | 67 | 58 | 30 | -21 | 36 |
| 45 | 24 | 52 | 75 | 43 | -33 | 31 |
| 60 | 13 | 39 | 87 | 57 | -46 | 25 |
| 90 | 5 | 20 | 97 | 79 | -56 | 14 |
| 120 | 4 | 9 | 97 | 91 | -36 | 7 |
| 180 | 4 | 1 | 98 | 99 | 55 | 4 |

**Table 13 Results of Experiment 12**

| Time | % Feed DNB-d-leu | % Feed DNB-l-leu | % Receive DNB-d-leu | % Receive DNB-l-leu | Feed e.e. | Receive e.e. |
|---|---|---|---|---|---|---|
| 0 | 100 | 100 | 0 | 0 | 3 | 0 |
| 2 | 92 | 94 | 6 | 1 | 2 | 77 |
| 4 | 86 | 91 | 10 | 3 | 0 | 55 |
| 6 | 82 | 89 | 16 | 5 | -1 | 52 |
| 8 | 77 | 86 | 19 | 7 | -3 | 51 |
| 10 | 74 | 85 | 23 | 8 | -4 | 50 |
| 12 | 70 | 83 | 27 | 10 | -5 | 48 |
| 14 | 65 | 80 | 32 | 10 | -7 | 53 |
| 20 | 55 | 73 | 43 | 15 | -12 | 50 |
| 30 | 40 | 63 | 56 | 22 | -19 | 45 |
| 45 | 26 | 52 | 72 | 33 | -30 | 39 |
| 60 | 17 | 41 | 83 | 44 | -39 | 32 |
| 90 | 9 | 28 | 93 | 59 | -50 | 25 |
| 120 | 6 | 18 | 95 | 70 | -49 | 18 |
| 180 | 5 | 8 | 96 | 81 | -22 | 11 |

**Table 14 Results of Experiment 13**

| Time | % Feed DNB-d-leu | % Feed DNB-1-leu | % Receive DNB-d-leu | % Receive DNB-1-leu | Feed e.e. | Receive e.e. |
|---|---|---|---|---|---|---|
| 0 | 100 | 100 | 0 | 0 | 5 | 0 |
| 2 | 89 | 91 | 5 | 1 | 4 | 60 |
| 4 | 84 | 90 | 9 | 1 | 2 | 76 |
| 6 | 82 | 87 | 13 | 4 | 2 | 59 |
| 8 | 78 | 87 | 17 | 6 | -1 | 54 |
| 10 | 73 | 84 | 22 | 7 | -2 | 57 |
| 12 | 70 | 82 | 25 | 9 | -3 | 51 |
| 14 | 66 | 83 | 30 | 11 | -7 | 49 |
| 20 | 57 | 79 | 40 | 16 | -11 | 47 |
| 30 | 43 | 68 | 55 | 25 | -19 | 42 |
| 45 | 27 | 57 | 70 | 37 | -31 | 36 |
| 60 | 17 | 46 | 80 | 48 | -42 | 30 |
| 90 | 7 | 29 | 90 | 65 | -58 | 21 |
| 120 | 4 | 20 | 94 | 76 | -67 | 15 |
| 180 | 2 | 7 | 94 | 88 | -49 | 8 |

**Table 15 Results of Experiment 14**

| Time | % Feed DNB-d-PheOH | % Feed DNB-1-PheOH | % Receive DNB-d-PheOH | % Receive DNB-1-PheOH | Feed e.e. | Receive e.e. |
|---|---|---|---|---|---|---|
| 0 | 100 | 100 | 0 | 0 | 4 | 0 |
| 2 | 86 | 90 | 5 | 1 | 2 | 64 |
| 4 | 81 | 87 | 12 | 6 | 0 | 38 |
| 6 | 75 | 82 | 19 | 10 | -1 | 35 |
| 8 | 69 | 79 | 25 | 14 | -3 | 32 |
| 10 | 62 | 73 | 32 | 20 | -5 | 26 |
| 12 | 55 | 68 | 39 | 23 | -7 | 28 |
| 14 | 49 | 63 | 44 | 27 | -9 | 26 |
| 20 | 35 | 52 | 58 | 40 | -16 | 21 |
| 30 | 19 | 34 | 75 | 52 | -26 | 21 |
| 45 | 6 | 16 | 88 | 74 | -40 | 12 |
| 60 | 2 | 4 | 92 | 83 | -31 | 9 |
| 90 | 1 | 0 | 92 | 89 | 97 | 5 |
| 120 | 2 | 1 | 92 | 89 | 52 | 5 |
| 180 | 2 | 0 | 91 | 90 | 72 | 4 |

**Table 16 Results of Experiment 15**

| Time | % Feed DNB-d-PheOH | % Feed DNB-1-PheOH | % Receive DNB-d-PheOH | % Receive DNB-1-PheOH | Feed e.e. | Receive e.e. |
|---|---|---|---|---|---|---|
| 0 | 100 | 100 | 0 | 0 | 4 | 0 |
| 2 | 92 | 93 | 5 | 2 | 4 | 48 |
| 4 | 88 | 93 | 10 | 5 | 1 | 41 |
| 6 | 82 | 89 | 15 | 8 | 0 | 36 |
| 8 | 76 | 85 | 21 | 11 | -1 | 37 |
| 10 | 71 | 83 | 26 | 13 | -4 | 35 |
| 12 | 67 | 80 | 31 | 17 | -5 | 35 |
| 14 | 62 | 77 | 36 | 19 | -6 | 34 |
| 20 | 50 | 69 | 47 | 27 | -12 | 32 |
| 30 | 33 | 56 | 62 | 38 | -22 | 28 |
| 45 | 16 | 39 | 80 | 55 | -37 | 23 |
| 60 | 8 | 25 | 88 | 66 | -49 | 19 |
| 90 | 2 | 12 | 94 | 80 | -62 | 12 |
| 120 | 1 | 4 | 95 | 89 | -44 | 8 |
| 180 | 2 | 1 | 95 | 92 | 44 | 6 |

**Table 17 Results of Experiment 16**

| Time | % Feed DNB-d-PheOH | % Feed DNB-l-PheOH | % Receive DNB-d-PheOH | % Receive DNB-1-PheOH | Feed e.e. | Receive e.e. |
|---|---|---|---|---|---|---|
| 0 | 100 | 100 | 0 | 0 | 4 | 0 |
| 2 | 96 | 97 | 5 | 2 | 3 | 48 |
| 4 | 85 | 89 | 10 | 6 | 2 | 33 |
| 6 | 78 | 83 | 16 | 9 | 1 | 31 |
| 8 | 74 | 81 | 22 | 13 | 0 | 27 |
| 10 | 69 | 78 | 27 | 17 | -2 | 27 |
| 12 | 64 | 74 | 32 | 20 | -3 | 26 |
| 14 | 60 | 71 | 38 | 24 | -4 | 27 |
| 20 | 47 | 61 | 49 | 34 | -9 | 22 |
| 30 | 30 | 45 | 67 | 49 | -16 | 19 |
| 45 | 13 | 25 | 84 | 69 | -28 | 14 |
| 60 | 5 | 13 | 93 | 82 | -37 | 10 |
| 90 | 2 | 2 | 97 | 93 | -14 | 6 |
| 120 | 2 | 1 | 97 | 95 | 25 | 5 |
| 180 | 2 | 1 | 96 | 95 | 47 | 5 |

**Table 18 Results of Experiment 17**

| Time | % Feed DNB-d-Val | % Feed DNB-1-Val | % Receive DNB-d-Val | % ReceiveDNB-1-Va | Feed e.e. | Receive e.e. |
|---|---|---|---|---|---|---|
| 0 | 100 | 100 | 0 | 0 | 3 | 0 |
| 2 | 94 | 96 | 2 | 1 | 2 | 41 |
| 4 | 90 | 93 | 5 | 1 | 1 | 59 |
| 6 | 87 | 92 | 9 | 3 | 0 | 45 |
| 8 | 83 | 91 | 12 | 5 | -2 | 42 |
| 10 | 79 | 88 | 16 | 5 | -2 | 56 |
| 12 | 76 | 87 | 20 | 5 | -4 | 63 |
| 14 | 73 | 86 | 23 | 8 | -5 | 50 |
| 20 | 64 | 81 | 31 | 15 | -9 | 39 |
| 30 | 52 | 70 | 43 | 21 | -12 | 37 |
| 45 | 35 | 60 | 62 | 34 | -24 | 32 |
| 60 | 26 | 53 | 72 | 42 | -31 | 29 |
| 90 | 12 | 38 | 84 | 57 | -49 | 22 |
| 120 | 6 | 24 | 92 | 69 | -60 | 17 |
| 180 | 2 | 7 | 96 | 87 | -61 | 8 |

## Claims

1. A continuous process for the enantioselective enrichment of first and second enantiomers from a mixture thereof, comprising:
I. continuously introducing each of (i) a feed solution containing the first and second enantiomers and (ii) a host solution containing a chiral host which will preferentially combine with the first enantiomer, into at least one first centrifugal contact-separator;
II. continuously contacting and separating the feed solution and host solution in the at least one first centrifugal contact-separator, whereby the chiral host preferentially forms a complex with the first enantiomer in the host solution to thereby obtain (iii) a host solution enriched with the first enantiomer and, optionally, containing a portion of the second enantiomer;
III. optionally, continuously washing the enriched host solution with a washing solution to remove preferentially therefrom at least a portion of the second enantiomer, and
IV. continuously stripping the first enantiomer from the enriched host solution with a stripping solution.

2. Process according to claim 1, wherein step III is performed and comprises a liquid-liquid extraction comprising:
III-A. continuously introducing each of (iii) enriched host solution from the at least one first centrifugal contact-separator and (iv) a washing solution capable of removing at least a portion of the second enantiomer from a complex thereof with the chiral host, into at least one second centrifugal contact-separator and continuously contacting and separating the enriched host solution (iii) and washing solution (iv) in the at least one second centrifugal contact-separator, thereby transferring at least a portion of the second enantiomer from the host solution into the washing solution; said process further comprising,
III-B. withdrawing from the at least one second centrifugal contact-separator
(v) washing solution comprising transferred second enantiomer; and
(vi) enriched host solution from which at least a portion of the second enantiomer has been preferentially washed.

3. Process according to claim 2, further comprising,
V. mixing the feed solution and the washing solution (v) from step III-B and continuously introducing the resulting mixture into the at least one first centrifugal contact-separator in step I.

4. Process according to any of the preceding claims, wherein step IV comprises continuously introducing each of the enriched host solution (vi) from step III-B and (vii) a stripping solution into at least a third centrifugal contact-separator and withdrawing therefrom the stripping solution containing (viii) enriched first enantiomer and (ix) a host solution containing said chiral host and using the host solution (ix) as the, or as part of the, host solution in step I.

5. Process according to any one of claims 2, 3 or 4, wherein there are 1 to 20 first centrifugal contact-separators and 1 to 20 second centrifugal contact-separators and wherein each of the first and second centrifugal contact-separators are arranged in series.

6. Process according to claim 5, wherein there are an equal number of the first and second centrifugal contact-separators and wherein the feed solution is introduced to a downstream-most, with respect to the direction of flow of washing solution, first centrifugal contact-separator with the washing solution (v) from step III-B.

7. Process according to any of the preceding claims, wherein the feed solution and receiving solution each comprise an aqueous solvent and the host solution comprises an organic solvent immiscible with the aqueous solvent; or wherein the feed solution and washing solution each comprise an organic solvent and the host solution comprises an aqueous solvent.

8. Process according to any of the preceding claims, wherein the amount of enriched first enantiomer recovered from the stripping solution is at least about 1.1 kg per hour.

9. A method for enriching a mixture of enantiomers which comprises continuously contacting the enantiomer mixture in a liquid system comprising at least a first liquid comprising a chiral host and a second liquid comprising a washing solution, wherein the first and second liquids are at least substantially immiscible and of different densities and enriching the enantiomer mixture by subjecting the liquid system containing the enantiomer mixture and the chiral host to centrifugal force in each of a plurality of serially arranged centrifugal contact-separators and separating washing solution containing enriched enantiomer at a rate of separation of at least about 1.1 kg of enriched enantiomer per hour, wherein the total amount of chiral host is less than the total amount, on a molar basis, of the separated enriched enantiomer.

10. Apparatus for separating one enantiomer from a mixture of enantiomers in a feed liquid comprising;
a rectification zone comprising at least one serially arranged centrifugal contact-separator;
a washing zone comprising at least one serially arranged centrifugal contact-separator;
a stripping zone;
a closed loop flow line for transporting a host solution comprising a chiral host compound through the at least one centrifugal contact-separator in the rectification zone, the at least one centrifugal contact-separator in the washing zone and the stripping zone;
a first flow line for transporting a washing solution through the centrifugal contact-separators in the rectification zone and the rectification zone;
a second flow line for introducing the feed liquid into the first flow line intermediate the washing zone and the rectification zone;
a first pump for pumping a washing solution via the first flow line first through the washing zone and through the rectification zone in that order; and
a second pump for pumping the host solution via the closed loop flow line through the rectification zone, the washing zone and the stripping zone in that order; the second pump being arranged to cause the host solution to flow through the closed loop flow line in counter-current direction to the flow of the washing solution through the first flow line.
